**Europäisches Patentamt**

**European Patent Office**

**Office européen des brevets**

(11) Veröffentlichungsnummer : **0 247 445 B1**

# EUROPÄISCHE PATENTSCHRIFT

(45) Veröffentlichungstag der Patentschrift :
09.01.91 Patentblatt 91/02

(51) Int. Cl.⁵ : **B01D 25/12, B01D 25/38**

(21) Anmeldenummer : **87106992.8**

(22) Anmeldetag : **14.05.87**

(54) **Waschvorrichtung für Filtertücher.**

(30) Priorität : **24.05.86 DE 8614127 U**

(43) Veröffentlichungstag der Anmeldung :
**02.12.87 Patentblatt 87/49**

(45) Bekanntmachung des Hinweises auf die
Patenterteilung :
**09.01.91 Patentblatt 91/02**

(84) Benannte Vertragsstaaten :
**BE CH DE FR GB IT LI NL**

(56) Entgegenhaltungen :
**CH-A- 593 705**
**US-A- 3 780 747**
**US-A- 4 076 033**

(73) Patentinhaber : **Häcker, Karl**
**Seussen 116**
**D-8594 Arzberg (DE)**

(72) Erfinder : **Häcker, Karl**
**Seussen 116**
**D-8594 Arzberg (DE)**

(74) Vertreter : **Tergau, Enno, Dipl.-Ing. et al**
**Tergau & Pohl Patentanwälte Hefnersplatz 3**
**Postfach 119347**
**D-8500 Nürnberg 11 (DE)**

EP 0 247 445 B1

## Beschreibung

Die Erfindung betrifft eine Waschvorrichtung insbesondere für an Filterplatten von Kammerfilterpressen befestigte Filtertücher mit den im Oberbegriff des Anspruches 1 angegebenen Merkmalen.

Bei Kammerfilterpressen besteht in gewissen Zeitabständen die Notwendigkeit, die Filtertücher von Rückständen, Verschmutzungen etc. zu befreien, um optimale Filtereigenschaften zu erzielen. Um den Arbeits-und Zeitaufwand dafür zu minimalisieren, sind automatische Waschvorrichtungen für Kammerfilterpressen bekannt. Beispielsweise in US-PS 3 780 747 ist eine derartige Waschvorrichtung für Filtertücher von Kammerfilterpressen angegeben. Diese enthält im wesentlichen eine in Pressenrichtung verfahrbare Quertraverse und einen auf dieser Quertraverse verfahrbaren Traversenwagen. An dem Traversenwagen ist heb- und senkbar ein senkrechter Tragarm angeordnet, an dessen Freiende zwei waagerechte, parallele Spritzbalken als Spritzeinrichtung befestigt sind. Diese Spritzbalken greifen in den Zwischenraum zwischen zwei Teilplattenstapel ein. Sie weisen eine Vielzahl in Reihe angeordneter Düsen auf, aus denen - gespeist aus einer voluminösen Hochdruckleitung - Wasser oder eine entsprechende Reinigungsflüssigkeit unter Hochdruck auf die offenliegenden Filterflächen der Filtertücher zweier einander zugewandter Pressenplatten gespritzt wird. Beim Waschvorgang wird die gesamte Breite der Filterfläche gleichzeitig von dem Waschstrahl des Spritzbalkens erfaßt, durch Verstellung des Tragarms über die gesamte Höhe des Filtertuches wird deren gesamte Fläche überstrichen und gereinigt. Gegebenenfalls kann mehrmals hintereinander eine Auf- und Abbewegung des Spritzbalkens durchgeführt werden. Nach erfolgtem Waschvorgang wird der Spritzbalken zusammen mit dem Tragarm durch Verschiebung des Traversenwagens auf der Quertraverse seitlich aus dem Zwischenraum zwischen den beiden Filterplatten herausgefahren, eine Platte von einem Teilplattenstapel zum zweiten verschoben und die Waschvorrichtung in den nun offenliegenden Zwischenraum unter vorheriger Verschiebung in Stapelrichtung eingefahren.

Die Waschvorrichtung nach US-PS 4 076 033 weist einen horizontal angeordneten Spritzbalken mit einer Vielzahl von Reinigungsdüsen auf. Der Spritzbalken greift in den Plattenzwischenraum ein und ist mittels eines Gestells in Vertikalrichtung verfahrbar gelagert. Durch die Fahrbewegung kann er die gesamte Plattenhöhe überstreichen, die Plattenbreite wird durch die Länge des Spritzbalkens abgedeckt. Um ein befriedigendes Reinigungsergebnis zu erzielen, ist der Spritzbalken in Horizontalrichtung über eine Strecke verschiebbar, die etwa dem halben Düsenabstand entspricht. Durch das Herunterfahren des Spritzbalkens und das anschließende Herauffahren in der horizontal versetzten Stellung erfolgt eine seitenversetzte, streifenweise Reinigung des Filtertuches. Da allgemein die Düsen nicht in einem beliebig geringen Abstand zueinander angeordnet werden können, brauchen bei der beschriebenen Spritzeinrichtung keine Breitstrahldüsen verwendet werden, die eine schlechtere Reinigungswirkung haben.

Die beschriebenen Waschvorrichtungen nach dem Stande der Technik weisen in vielerlei Hinsicht Nachteile auf. Durch die große Anzahl der entlang des Spritzbalkens montierten Hochdruckdüsen wird im Betrieb sehr viel Wasser verbraucht. Dies bedingt bei dem hohen, erforderlichen Wasserdruck von etwa 100 bar eine entsprechend hohe Förderleistung der zugeordneten Wasserpumpe. Die diese antreibenden Elektromotoren sind entsprechend auszulegen, als Richtwerte gelten Leistungen von 30 kW bei Waschvorrichtungen für kleine Kammerfilterpressen (Plattenfläche 0,8 × 0,8 m²) bis zu 75 kW bei Pressen mit einer Plattenfläche von 1,5 × 1,5 m².

Durch die notwendige Verschiebbarkeit der Waschvorrichtung muß die Zuführungsleitung für die Reinigungsflüssigkeit flexibel sein. Dies bedingt in der Regel die Verwendung eines Hochdruckschlauches. Da dieser eine Flüssigkeitsmenge von 140 l pro Minute bis mehr als 300 l pro Minute bei einem Druck von 100 bar fördern muß, weist er einen entsprechend großen Durchmesser auf. Dies hat zur Folge, daß der Hochdruckschlauch im Betrieb der Waschvorrichtung knallhart, außergewöhnlich unflexibel und dadurch schwer manipulierbar ist. Es müssen in der Regel spezielle Führungen und Freiräume im Pressenbereich für den Druckschlauch bereitgestellt werden. Außerdem muß dafür Sorge getragen werden, daß das Bedienungspersonal beim Einschalten der Waschvorrichtung nicht durch den Hochdruckschlauch selbst verletzt wird. Dieser kann nämlich bei seiner Beaufschlagung durch einen Wasserdruck von etwa 100 bar unkontrolliert herumschnellen und im ungünstigsten Falle Bedienungspersonen oder Betriebseinrichtungen treffen. Um dies auszuschließen, sind gesonderte Schutzvorrichtungen, Führungen od.dgl. notwendig. Um diesen Nachteil von vornherein zu vermeiden, sind Waschvorrichtungen nach dem Stande der Technik bekannt, bei denen die Hochdruckpumpe direkt im Bereich des Tragarmes bzw. Spritzbalkens angeordnet ist, so daß lediglich ein unter Normaldruck stehender Wasserzuführungsschlauch notwendig ist. Jedoch erhöht sich durch diese Plazierung der Hochdruckpumpe der konstruktive Aufwand für die Waschvorrichtung selbst erheblich, da diese weitaus höhere Lasten tragen muß.

Ein weiterer Nachteil der bekannten Waschvorrichtungen mit einer Vielzahl von Hochdruckdüsen ist die Tatsache, daß beim Waschvorgang eine große Wassermenge gleichzeitig verspritzt wird. Dadurch entsteht in einem weiten Bereich um die Kammerfilterpresse ein Sprühnebel, der sämtliche dort stehenden Betriebseinrichtungen benetzt und zudem ungünstige klimatische Verhältnisse am Betriebsort erzeugt. Hier ist versucht worden, durch seitlich und oberhalb der Spritzbalken angeordnete Spritzschutzwände eine Verbesserung zu erzielen. Dies bedeutet jedoch wiederum einen erhöhten konstruktiven Aufwand für die Waschvorrichtung selbst.

Ausgehend von den genannten Nachteilen bekannter Waschvorrichtungen liegt der Erfindung die Aufgabe zugrunde, eine Waschvorrichtung für an Filterplatten von Kammerfilterpressen befestigte Filtertücher anzugeben, die auf konstruktiv einfache Weise eine weitaus geringere Fördermenge von Reinigungsflüssigkeit benötigt und dadurch die zum Stande der Technik genannten Nachteile vermeidet.

Diese Aufgabe wird durch die kennzeichnenden Merkmale des Anspruches 1 gelöst. Demnach ist die Spritzeinrichtung der Waschvorrichtung als Spritzkopf mit nurmehr einem Düsenpaar bestückt, aus dessen beiden Düsen jeweils ein Hochdruckwaschstrahl austritt. Diese spritzen jeweils in eine der zwei entgegengesetzten, im wesentlichen parallel zur Stapelrichtung auf die gegenüberliegenden Filterflächen der Filtertücher weisenden Hauptstrahlrichtungen der Waschvorrichtung.

Spritzkopf und Stellarm sind zum Überstreichen der gesamten Plattenbreite in Querrichtung zum Plattenstapel verfahrbar gelagert. Durch Überlagerung einer Bewegung in dieser Richtung mit der bereits nach dem Stande der Technik bekannten Verschiebung in Höhenrichtung der Filterplatte kann damit quasi die gesamte Filterfläche der Filtertücher "abgerastert" und somit gereinigt werden. Dazu bewegt sich der Spritzkopf beispielsweise in Querrichtung über die gesamte Breite des Filtertuches, wird an dessen Rand etwas in Höhenrichtung verschoben und wieder zurück zum gegenüberliegenden Rand des Filtertuches verfahren. Je enger die Höhenverschiebung des Spritzkopfes zwischen den Querfahrten ist, desto besser wird das erzielbare Reinigungsergebnis.

Die Verwendung von lediglich zwei Düsen reduziert den Wasserverbrauch enorm. Die benötigten Fördermengen liegen bei etwa 15 bis 50 l pro Minute, was etwa einem Zehntel bis einem Sechstel der Fördermengen bei bekannten Waschvorrichtungen entspricht. Bei gleichem Wasserdruck von 100 bar bedeutet dies, daß der Hochdruckschlauch zur Zuführung der Reinigungsflüssigkeit weitaus dünner ausgebildet sein kann. Die Innendurchmesser der Hochdruckschläuche nach dem Stande der Technik und der Erfindung verhalten sich etwa wie 5 : 1, wobei die benötigten Schlauchwandstärken aus Festigkeitsgründen überproportional mit dem Innendurchmesser ansteigen. Entsprechend ist das Verhältnis der Außendurchmesser und das Steifigkeitsverhältnis der verglichenen Schläuche bei Beaufschlagung durch einen Wasserdruck von 100 bar noch weitaus höher. Ganz anschaulich ist der Hochdruckschlauch bei Waschvorrichtungen nach dem Stande der Technik mit einem Feuerwehrschlauch zu vergleichen, wogegen der Hochdruckschlauch beim Erfindungsgegenstand mehr einem Gartenschlauch ähnelt. Es müssen entsprechend keine aufwendigen Schutz- und Führungseinrichtungen bei der erfindungsgemäßen Waschvorrichtung vorhanden sein, der Platzbedarf ist entsprechend geringer.

Durch die geringeren Schlauchdurchmesser und Fördermengen ist zudem das Hochdrucksystem der Waschvorrichtung weitaus weniger anfällig gegen Schlauchschäden u.dgl.

Mit den geringeren benötigten Fördermengen an Waschflüssigkeit sind auch die zugeordneten Pumpen und Antriebsmotoren für diese kleiner auszulegen. In der Regel reicht eine Motorleistung von 5 bis 6 kW für den Pumpenantrieb aus, so daß auch hier der konstruktive Aufwand stark reduziert wird.

Darüber hinaus ist wegen der geringeren Dimensionierung aller Bauteile der konstruktive Aufwand für das Verfahrwerk selbst erheblich reduziert. Dies wird durch einen Vergleich der erfindungsgemäßen Konstruktion mit der nach US-PS 3 780 747 offensichtlich.

Zusammenfassend weist die erfindungsgemäße Waschvorrichtung eine Vielzahl von Vorteilen gegenüber Waschvorrichtungen nach dem Stande der Technik auf. Es sind dies durch die weitaus niedrigere benötigte Fördermenge eine einfachere Handhabbarkeit durch geringere Dimensionierung der Bauteile und eine höhere Zuverlässigkeit. Demgegenüber wird der Nachteil eines erhöhten Zeitaufwandes für den Waschvorgang in Kauf genommen. Durch die notwendige Abtastung der Filterfläche in Höhen- und Breitenrichtung der Filterplatten ist der Zeitaufwand für einen kompletten Waschgang zwar etwa doppelt bis dreifach so hoch als bei Waschvorrichtungen nach dem Stande der Technik, da die Reinigung der Filtertücher jedoch nur in Abständen von einer Woche bis einem Monat vorgenommen werden muß, ist dieser Nachteil weniger relevant.

Die Unteransprüche betreffen vorteilhafte Weiterbildungen des Erfindungsgegenstandes.

Gemäß Anspruch 2 sind Spritzkopf und Stellarm an einer oberhalb des Plattenstapels in Stapelrichtung verfahrbar gelagerten Trägerbrücke montiert, deren Breite im wesentlichen der Breite der Filterplatten entspricht. Durch eine Verschiebung der Trägerbrücke in Stapelrichtung können nacheinander die einzelnen Plattenzwischenräume zur Reinigung aller Filterflächen der Filtertücher erreicht werden. Die Bewegung in Querrichtung wird durch eine entsprechend verfahrbare Lagerung des Stellarmes an der Trägerbrücke erzielt.

Durch das Kennzeichnungsmerkmal des Anspruches 3 werden vorhandene Bauelemente der Kammerfilterpresse für die Lagerung der Waschvorrichtung verwendet. In der Regel ist nämlich bei Kammerfilterpresen auf Längsstreben, die oberhalb des Plattenstapels zu dessen beiden Seiten in Stapelrichtung angeordnet sind, ein Schlitten für den Plattenantrieb in Stapelrichtung beweglich gelagert. Dieser zieht bei der Plattenentleerung jeweils die vorderste Filterplatte des Plattenstapels von diesem weg, wodurch der Filterkuchen aus der Filterkammer fallen kann. Durch Drehrichtungsumsteuerung fährt der Plattenantriebsschlitten hin und her und öffnet sukzessive jede Filterkammer. Auf den Längsstreben kann zusätzlich die Trägerbrücke für die Waschvorrichtung in Stapelrichtung beweglich montiert sein.

Die Verfahrbarkeit des Stellarmes und Spritzkopfes der Waschvorrichtung in Querrichtung zum Plattenstapel wird gemäß Anspruch 4 durch einen Laufwagen erzielt, an dem der Stellarm mit seinem Befestigungsende montiert ist. Der Laufwagen ist an in Querrichtung angeordneten Führungsschienen der Trägerbrücke verfahrbar gelagert.

Gemäß Anspruch 5 ist der Stellarm des Spritzkopfes zur Hebung und Senkung des Düsenpaares teleskopartig ausgebildet. Durch eine Ausgestaltung des Erfindungsgegenstandes gemäß der Ansprüche 1 bis 5 werden mit konstruktiv einfachsten Mitteln die drei benötigten Freiheitsgrade (Längs-, Quer-, Höhenrichtung) für die Abtastbewegung des Spritzkopfes bereitgestellt. Insbesondere ist der Spritzkopf in seiner Bewegung während des Waschvorganges so steuerbar, daß er beim Wechsel des Plattenzwischenraumes nicht seitlich, sondern oberhalb des Plattenstapels an diesem vorbeigeführt wird. Zusammen mit einer Zuführung des Hochdruckschlauches von oben beansprucht die Waschvorrichtung seitlich vom Plattenstapel keinerlei Raum. Demzufolge sind mehrere Filterpressen eng nebeneinander aufstellbar, der geringere Platzbedarf für eine komplette Mehrpressenanlage ist offensichtlich.

Gemäß Anspruch 6 ist der Verfahrweg des Spritzkopfes beim Waschvorgang in Quer- und Höhenrichtung entsprechend der Plattenform steuerbar. Es kann also die gesamte Filterfläche des Filtertuches formgenau vom Waschstrahl überstrichen werden. Diese Weiterbildung des Erfindungsgegenstandes ist vor allem im Zusammenhang mit Sonderformen von Filterplatten vorteilhaft. Aus filtertechnischen Gründen sind nämlich Platten bekannt, die unregelmäßig geformt sind, d.h. die seitliche Ausbuchtungen, Einschnitte u.dgl. aufweisen. Bei herkömmlichen Waschvorrichtungen mit sich über die gesamte Plattenbreite erstreckenden Spritzbalken würde bei Vorhandensein solcher Unregelmäßigkeiten entweder ein Teil der Filterfläche nicht gereinigt oder Waschflüssigkeit teilweise neben der Filterplatte verspritzt. Ein weiterer Vorteil der Steuerbarkeit des Verfahrwegs des Spritzkopfes entsprechend der Plattenform ist die Tatsache, daß dadurch ein und dieselbe Waschvorrichtung für Platten mit unterschiedlicher Form und insbesondere Breite verwendet werden können. Es muß lediglich der maximale Verfahrweg in Querrichtung der Plattenbreite angepaßt sein. Für die Steuerung des Verfahrweges können die Motoren für Quer- und Höhenbewegung mittels elektromechanischer Sensoren (Endanschlagschalter), elektrooptischer Sensoren (Lichtschranken) oder intelligenter Steuersysteme wie etwa einer NC-Steuerung kontrolliert werden.

Durch die geringere Dimensionierung aller Bauteile der erfindungsgemäßen Waschvorrichtung ist es möglich, diese als Zusatzeinrichtung auszubilden, die auf die Längsstreben einer Kammerfilterpresse aufsetzbar ist (Anspruch 7). Nach erfolgtem Waschvorgang kann die Waschvorrichtung wieder abgenommen und bei einer anderen Filterpresse verwendet werden. Diese kann sogar aus obengenannten Gründen eine andere Plattenbreite bzw. -form aufweisen.

Ein weiterer durch die Kompaktheit und geringere Dimensionierung der erfindungsgemäßen Waschvorrichtung erzielter Vorteil ist die Möglichkeit, die gesamte Waschvorrichtung aus korrosionsbeständigen Edelstählen zu fertigen. Dies ist oft unerläßlich, wenn in den Filterpressen aggressive Flüssigkeiten und Stoffe behandelt werden. Bei den ausladenden und überdimensionierten Bauteilen bei Waschvorrichtungen nach dem Stand der Technik würde deren Herstellung aus Edelstählen einen nicht vertretbaren Kostenaufwand bedeuten.

Als besonderes vorteilhaft wird eine Kombination der erfindungsgemäßen Waschvorrichtung mit einer Kammerfilterpresse gemäß der DE-PS 34 08 140 angesehen, wie es im Anspruch 8 angegeben ist. Die Waschvorrichtung ist dazu in den Plattenantriebsschlitten integriert, der auf den Längsstreben der Filterpresse verfahrbar gelagert ist. In der vorgenannten Patentschrift ist eine spezielle Steuerung für den Plattenantriebsschlitten angegeben, der die einzelnen Filterplatten der Kammerfilterprese zur Entleerung des Filterkuchens verschiebt. Die entsprechenden Merkmale dieser Steuerung sind dem Anspruch 8 entnehmbar. Kurz umrissen erfolgt der Verschiebeantrieb für die Platten der Kammerfilterpresse zur Vermeidung einer Verletzungsgefahr sanft und gefühlvoll und gewährleistet dennoch ein sicheres Verschieben der Platten von der einen in die andere Endlage. Genau diese Eigenschaften und Vorteile können auch im Zusammenhang mit der Plattenverschiebung beim Waschvorgang erzielt werden.

Die Erfindung wird anhand der beiliegenden Figuren in einem Ausführungsbeispiel näher erläutert. Es zeigen:

Fig. 1 eine perspektivische, schematische Ansicht der Waschvorrichtung und

Fig. 2 eine schematische Seitenansicht einer Kammerfilterpresse mit in Funktionsstellung befindlicher Waschvorrichtung.

Die erfindungsgemäße Waschvorrichtung 1 dient zur Reinigung der Filterflächen 2 von an Filterplatten 3 der Kammerfilterpresse 4 befestigten Filtertüchern 5. Sie besteht im wesentlichen aus der Trägerbrücke 6, dem Laufwagen 7 und dem daran befestigten Stellarm 8, an dessen Freiende 9 der Spritzkopf 10 befestigt ist.

Die Trägerbrücke 6 enthält Längstraversen 11, die beispielsweise mit Rollen auf den oberhalb des Plattenstapels 12 zu dessen beiden Seiten in Stapelrichtung 13 angeordneten Längsstreben 14 der Kammerfilterpresse 4 verfahrbar gelagert sind. Der Verfahrantrieb erfolgt beispielsweise durch eine Spindel, Kette, Zahnriemen o.dgl. Durch die verfahrbare Trägerbrücke 6 ist der Bewegungsfreiheitsgrad der Waschvorrichtung 1 in Stapelrichtung 13 gegeben, wodurch die Waschvorrichtung 1 jeweils entsprechend der längsaxialen Lage des Plattenzwischenraumes 15 einstellbar ist.

Die beiden Längstraversen 11 der Trägerbrücke 6 sind durch die Führungsschienen 16 verbunden, auf denen der Laufwagen 7 in Querrichtung verfahrbar angeordnet ist. Der Laufwagen 7 ist ebenfalls rollengelagert, sein Antrieb kann beispielsweise über einen eigenen Elektromotor (nicht dargestellt) erzeugt werden. Durch die Verfahrbarkeit des Laufwagens 7 auf den Führungsschienen 16 ist der Bewegungsfreiheitsgrad der Waschvorrichtung 1 in Querrichtung 17 gegeben.

Am Laufwagen 7 ist mit seinem Befestigungsende 18 der Stellarm 8 der Waschvorrichtung 1 montiert. Der am Freiende 9 angeordnete Spritzkopf 10 der Waschvorrichtung 1 enthält ein Düsenpaar, aus dessen beiden Düsen 19 die Reinigungsflüssigkeit 20 in die beiden Hauptstrahlrichtungen 21, 21′ unter Hochdruck gespritzt wird. Die beiden Hauptstrahlrichtungen 21, 21′ weisen jeweils entgegengesetzt, parallel zur Stapelrichtung 13 auf die Filterflächen 2 der Filtertücher 5.

Der dritte benötigte Bewegungsfreiheitsgrad der Waschvorrichtung 1 in Höhenrichtung 22 wird durch die teleskopartige Zweiteilung des Stellarmes 8 erzielt. Am Laufwagen 7 ist sein Führungsteil 23 befestigt, in dem die Spritzkopfstange 24 auf- und abbeweglich gelagert ist. Die Auf- und Abbewegung ist beispielsweise durch den Eingriff eines Zahnritzels in eine an der Spritzkopfstange 24 angeordnete Zahnstange möglich.

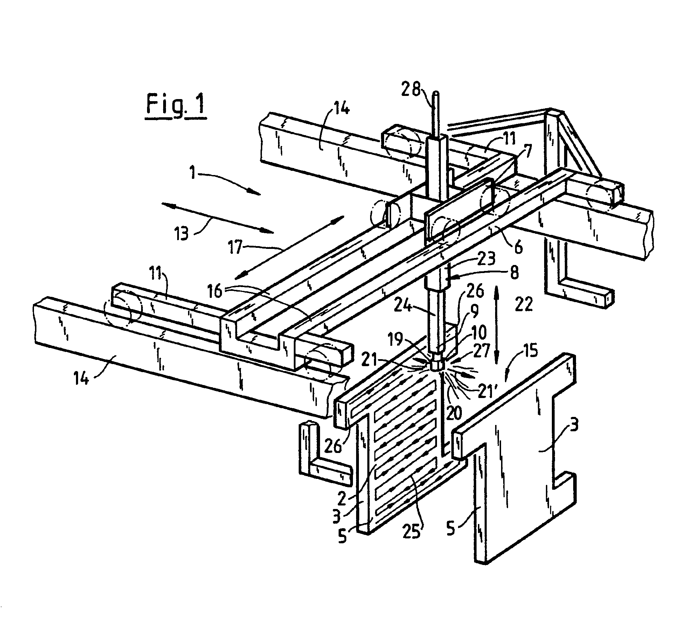

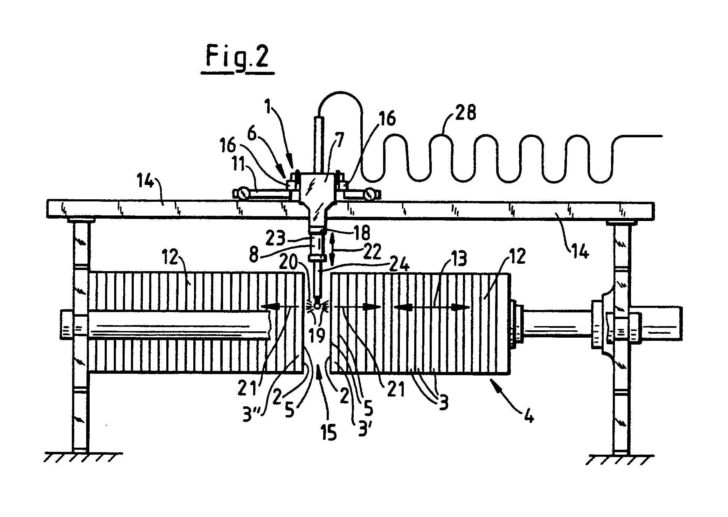

Der Waschvorgang wird wie folgt durchgeführt : Ausgehend von einer inaktiven Stellung der Waschvorrichtung 1 mit über den Plattenstapel 12 angehobenem Spritzkopf 10 wird die jeweils vorderste, auf einer Seite bereits gereinigte Filterplatte 3′ von dem (nicht dargestellten) Plattenantriebsschlitten vom nicht gereinigten Stapelteil abgezogen und bis zur letztverschobenen, auf beiden Seiten gereinigten Filterplatte 3″ verschoben (Fig. 2). Dadurch wird ein neuer Plattenzwischenraum 15 geöffnet, zu dessen beiden Seiten vertikal und parallel die zu reinigenden Filterflächen 2 der Filtertücher 5 sich gegenüberstehen. Anschließend wird etwa mittig in den Plattenzwischenraum 15 der Spritzkopf 10 durch entsprechende Verschiebung der Trägerbrücke 6, des Laufwagens 7 und der Spritzkopfstange 24 des Stellarmes 8 eingeführt. Durch eine entsprechende Steuerung in Quer- 17 und Höhenrichtung 22 wird der Spritzkopf 10 entlang des in Fig. 1 dargestellten Verfahrweges 25 bewegt, wodurch die gesamte zu reinigende Filterfläche sukzessive "abgetastet" und durch Hochdruckabspritzung gereinigt wird. Der gezeigte Verfahrweg 25 ist lediglich exemplarisch. Aus rationellen Gründen ist dieser jedoch möglichst kurz zu wählen. Beliebige "Mäanderformen" zur Überstreichung der gesamten Plattenfläche sind zwar denkbar, jedoch wenig sinnvoll. Wie aus Fig. 1 deutlich wird, kann durch die erfindungsgemäße Waschvorrichtung auch eine unregelmäßige Plattenform mit den seitlichen Ausbuchtungen 26 bzw. Aussparungen 27 durch entsprechende Wahl des Verfahrweges 25 ohne Verlust von Reinigungsflüssigkeit gereinigt werden.

Wie in Fig. 2 deutlich wird, werden die Düsen 19 über eine Hochdruckleitung im Stellarm 8 von dem Hochdruckschlauch 28 gespeist, der am rückseitigen Ende des Stellarmes 8 angeschlossen ist. Der Hochdruckschlauch 28 wird mit Waschflüssigkeit mit einem Druck von etwa 100 bar von einer (nicht dargestellten) Hochdruckpumpe beschickt, er hat eine Fördermenge von etwa 15 bis 20 l pro Minute zu bewältigen. Wie in Fig. 2 angedeutet, kann der Hochdruckschlauch 28 etwa oberhalb der Kammerfilterpresse 4 in Stapelrichtung 13 verschiebbar aufgehängt sein. Durch seinen geringen Durchmesser - etwa einem Gartenschlauch vergleichbar - ist er trotz Beaufschlagung durch den hohen Wasserdruck für eine derartige Aufhängung flexibel genug.

Bezugszeichenliste

1   Waschvorrichtung

2   Filterfläche

3   Filterplatte

4   Kammerfilterpresse

5   Filtertuch

6   Trägerbrücke

7   Laufwagen

8   Stellarm

9   Freiende

10  Spritzkopf

11  Längstraverse

12  Plattenstapel

13  Stapelrichtung

14  Längsstrebe

15  Plattenzwischenraum

16  Führungsschiene

17  Querrichtung

18  Befestigungsende

19  Düse

20  Reinigungsflüssigkeit

21,21'   Hauptstrahlrichtung

22  Höhenrichtung

23  Führungsteil

24  Spritzkopfstange

25  Verfahrweg

26  Ausbuchtung

27  Aussparung

28  Hochdruckschlauch

**Ansprüche**

1. Waschvorrichtung (1) insbesondere für an Filterplatten (3) von Kammerfilterpressen (4) befestigte Filtertücher (5) mit einer Spritzeinrichtung,
   – die mittels eines oberhalb des Plattenstapels (12) in Stapelrichtung (13) verfahrbaren Trägers (Trägerbrücke 6) in Stapelrichtung (13) verschiebbar ist,
   – die mittels eines im wesentlichen vertikalen, am Träger (Trägerbrücke 6) gelagerten Stellarmes (8) heb- und senkbar angeordnet ist,
   – die beim Waschvorgang in den jeweiligen Plattenzwischenraum (15) eingreift und
   – deren von einer Hochdruckleitung (Hochdruckschlauch 28) mit Reinigungsflüssigkeit gespeisten Düsen (19) die Reinigungsflüssigkeit in zwei entgegengesetzten, im wesentlichen parallel zur Stapelrichtung (13) auf die gegenüberliegenden Filterflächen (2) weisenden Hauptstrahlrichtungen (21, 21') unter Hochdruck auf die jeweils zu reinigenden Filtertücher (5) spritzen, dadurch gekennzeichnet,
   – daß die Spritzeinrichtung ein mit einem Düsenpaar bestückter Spritzkopf (10) ist, aus dessen beiden Düsen (19) jeweils ein Hochdruckwaschstrahl in eine der Hauptstrahlrichtungen (21, 21') austritt und
   – daß Spritzkopf (10) und Stellarm (8) zum Überstreichen der Plattenbreite in Querrichtung (17) zum Plattenstapel (12) verfahrbar gelagert sind.

2. Waschvorrichtung nach Anspruch 1, dadurch gekennzeichnet, daß der Spritzkopf (10) und Stellarm (8) an einer oberhalb des Plattenstapels (12) in Stapelrichtung (13) verfahrbar gelagerten Trägerbrücke (6) montiert sind, deren Breite im wesentlichen der Breite der Filterplatten (3) entspricht.

3. Waschvorrichtung nach Anspruch 2, dadurch gekennzeichnet, daß die Trägerbrücke (6) an Längsstreben (14) der Filterpresse (4) verfahrbar gelagert ist, welche Streben einen Schlitten für den Plattenantrieb tragen und oberhalb des Plattenstapels (12) zu dessen beiden Seiten in Stapelrichtung (13) angeordnet sind.

4. Waschvorrichtung nach Anspruch 2 oder 3, dadurch gekennzeichnet, daß der Stellarm (8) des Spritzkopfes (10) mit seinem Befestigungsende (18) an einem Laufwagen (7) montiert ist, der an in Querrichtung (17) angeordneten Führungsschienen (16) der Trägerbrücke (6) verfahbar gelagert ist.

5. Waschvorrichtung nach einem der vorgenannten Ansprüche, dadurch gekennzeichnet, daß der Stellarm (8) des Spritzkopfes (10) zur Hebung und Senkung des Düsenpaares teleskopartig ausgebildet ist.

6. Waschvorrichtung nach einem der vorgenannten Ansprüche, dadurch gekennzeichnet, daß der Verfahrweg (25) des Spritzkopfes (10) beim Waschvorgang in Quer-(17) und Höhenrichtung (22) entsprechend der Plattenform derart steuerbar ist, daß dabei im wesentlichen die gesamte Filterfläche (2) des Filtertuches (5) formgenau vom Waschstrahl überstrichen wird.

7. Waschvorrichtung nach einem der vorgenannten Ansprüche, dadurch gekennzeichnet, daß die Waschvorrichtung (1) als auf die Längsstreben (14) einer Kammerfilterpresse (4) aufsetzbare Zusatzeinrichtung ausgebildet ist.

8. Kammerfilterpresse (4) mit einer Verschiebevorrichtung für die Filterplatten (3), die im wesentlichen

– aus einem an einem Maschinenrahmen in Stapelrichtung (13) der parallel zueinander verschiebbar angeordneten Filterplatten (3) geführten Plattenantriebsschlitten besteht, der mit Rastmitteln zum Angriff an Gegenrasten der jeweils vordersten Filterplatte (3) versehen ist, sowie

– einen Schlittenantrieb mit einer Steuerschaltung aufweist, die die Drehrichtung eines elektrisch mit ihr verbundenen Antriebsmotors bei Überschreitung eines vorgebbaren Bewegungswiderstandes ansteuert, wobei

– der Antriebsmotor über einen einstellbaren Leistungsregeler betrieben wird, der auf eine einen gleichmäßigen langsamen Plattenvorschub gerade noch gewährleistende erste Leistungsschwelle ($P_1$) einstellbar ist;

– der Antriebsmotor ein sein Drehmoment im erzwungenen Stillstand im wesentlichen aufrechterhaltender, permanent erregter Gleichstromservomotor mit niedrigem Massenträgheitsmoment ist,

– mit dem Ausgang eines in die Motorversorgungsleitung eingesetzten Stromspannungswandlers

– einerseits der Eingang eines ersten setzbaren Zeitgliedes, dessen Ausgang einen ersten Steuereingang des Leistungsreglers zur stetigen Erhöhung der abgegebenen Verschubleistung betreibt sowie

– andererseits der Eingang eines Komparators verbunden ist, der die abgegebene Verschubleistung des Reglers mit einem vorgebbaren Sollwert vergleicht, bei dessen Erreichen ein mit dem Komparatorausgang verbundener Umschalter zur Drehrichtungsumsteuerung des Motors ansteuerbar ist und

– die Trägerbrücke (6) der Waschvorrichtung (1) gemäß einem der Ansprüche 1 bis 7 in den Plattenantriebsschlitten der Kammerfilterpresse (4) integriert ist.

## Claims

1. Washing apparatus (1), in particular for filter cloths (5) fixed to filter plates (3) of chamber filter presses (4), comprising a spraying device

– which is displaceable in the stack direction (13) by means of a support (supporting bridge 6) movable above the plate stack (12) in the stack direction (13),

– which is arranged in such a way that it can be lifted and lowered by means of an essentially vertical adjusting arm (8) mounted on the support (supporting brige 6),

– which reaches into the respective intermediate space (15) of the plates during the washing operation, and

– whose nozzles (19), fed with cleaning liquid from a high-pressure line (high-pressure hose 28), spray the cleaning liquid into opposite main jet directions (21, 21'), pointing essentially parallel to the stack direction (13) towards the opposite filter surfaces (2), under high pressure on to the filter cloths (5) to be cleaned in each case, characterized in that

– the spraying device is a spraying head (10) which is fitted with a nozzle pair and from whose two nozzles (19) in each case a high-pressure washing jet emerges in one of the main jet directions (21, 21'), and in that

– the spraying head (10) and adjusting arm (8) are movably mounted for sweeping over the plate width in the transverse direction (17) relative to the plate stack (12).

2. Washing apparatus according to Claim 1, characterized in that the spraying head (10) and adjusting arm (8) are mounted on a supporting bridge (6) which is movably mounted in the stack direction (13) above the plate stack (12) and whose width essentially corresponds to the width of the filter plates (3).

3. Washing apparatus according to Claim 2, characterized in that the supporting bridge (6) is movably mounted on longitudinal struts (14) of the filter press (4), which struts carry a slide for the plate drive and are arranged above the plate stack (12) on both sides of the latter in the stack direction (13).

4. Washing apparatus according to Claim 2 or 3, characterized in that the adjusting arm (8) of the spraying head (10), with its fixing end (18), is mounted on a travelling carriage (7) which is movably mounted on guide rails (16), arranged in the transverse direction (17), of the supporting bridge (6).

5. Washing apparatus according to one of the preceding claims, characterized in that the adjusting arm (8) of the spraying head (10), for lifting and lowering the nozzle pair, is of telescopic design.

6. Washing apparatus according to one of the preceding claims, characterized in that the traverse path (25) of the spraying head (10) can be controlled during the washing operation in the transverse (17) and vertical direction (22) in accordance with the plate shape in such a way that, as a result, essentially the entire filter surface (2) of the filter cloth (5) is swept in a geometrically accurate manner by the water jet.

7. Washing apparatus according to one of the preceding claims, characterized in that the washing apparatus (1) is designed as an attachment which can be put on to the longitudinal struts (14) of a chamber filter press (4).

8. Chamber filter press (4) having a displacement apparatus for the filter plates (3), which essentially
- consists of a plate-drive slide which is guided on a machine frame in the stack direction (13) of the filter plates (3), arranged so as to be displaceable parallel to one another, and is provided with detent means for engaging on mating detents of the respectively frontmost filter plate (3), and also
- has a slide drive having a control circuit which, when a predeterminable kinetic resistance is exceeded, controls the direction of rotation of a drive motor electrically connected to it, in which arrangement
- the drive motor is operated via an adjustable output regulator which is adjustable to a first output threshold ($P_1$) only just ensuring a uniform slow plate feed ;
- the drive motor is a permanently excited directcurrent servomotor essentially maintaining its torque during forced stoppage and having a low mass moment of inertia,
- connected to the output of a current-voltage transformer inserted into the motor supply line are
- on the one hand the input of a first timing element, which can be set and whose output operates a first control input of the output regulator for the steady increase in the delivered displacement power, and
- on the other hand the input of a comparator, which compares the delivered displacement power of the regulator with a predeterminable desired value, and when said desired value is reached a change-over switch connected to the comparator output can be activated for reversing the direction of rotation of the motor, and
- the supporting bridge (6) of the washing apparatus (1) according to one of Claims 1 to 7 is integrated in the plate-drive slide of the chamber filter press (4).

**Revendications**

1. Dispositif de lavage (1) en particulier pour toiles filtrantes (5) fixées sur les plateaux filtrants (3) de filtrespresses à chambres (4) avec un dispositif d'arrosage,
- qui est déplaçable dans la direction de l'empilement (13) au moyen d'un support (pont de support 6) déplaçable au-dessus de l'empilement de plateaux (12) dans la direction de l'empilement (13),
- qui est disposé de façon à pouvoir être soulevé et abaissé au moyen d'un bras de réglage (8) sensiblement vertical fixé au support (pont de support 6),
- qui pénètre au cours du processus de lavage dans les différents interstices (15) entre les plateaux et

- dont les buses (19) alimentées en liquide de lavage par une conduite haute pression (tuyau haute pression 28) projettent le liquide de lavage sous haute pression sur les différentes toiles filtrantes (5) à nettoyer, dans deux directions principales de jet (21, 21') opposées, sensiblement parallèles à la direction d'empilement (13) et dirigées vers les surfaces filtrantes opposées, caractérisé en ce que
- le dispositif d'arrosage est une tête d'arrosage (10) munie d'une paire de buses des deux buses (19) de laquelle sort à chaque fois un jet de lavage haute pression dans l'une des directions principales de jet (21, 21') et
- la tête d'arrosage (10) et le bras de réglage (8) sont disposés de façon déplaçable dans la direction transversale (17) par rapport à l'empilement de plateaux (12) pour balayer la largeur des plateaux.

2. Dispositif de lavage selon la revendication 1, caractérisé en ce que la tête d'arrosage (10) et le bras de réglage (8) sont montés sur un pont de support (6) disposé au-dessus de l'empilement de plateaux (12) de façon à pouvoir se déplacer dans la direction d'empilement (13) et dont la largeur correspond sensiblement à la largeur des plateaux filtrants (3).

3. Dispositif de lavage selon la revendication 2, caractérisé en ce que le pont de support (6) est disposé de façon à pouvoir se déplacer sur des supports longitudinaux (14) du filtre-presse (4), lesquels supports portent un traineau pour l'entraînement des plateaux et sont disposés au-dessus de l'empilement de plateaux (12) des deux côtés de celui-ci dans la direction d'empilement (13).

4. Dispositif de lavage selon la revendication 2 ou 3, caractérisé en ce que le bras de réglage (8) de la tête d'arrosage (10) est monté par son extrémité de fixation (18) sur un chariot (7) qui est disposé de façon à pouvoir se déplacer sur des rails de guidage (16) du pont de support (6) disposés dans la direction transversale (17).

5. Dispositif de lavage selon l'une des revendications précédentes, caractérisé en ce que le bras de réglage (8) de la tête d'arrosage (10) est télescopique en vue du soulèvement et de l'abaissement de la paire de buses.

6. Dispositif de lavage selon l'une des revendications précédentes, caractérisé en ce que le trajet de déplacement (25) de la tête d'arrosage (10) peut être commandé pendant le processus de lavage dans la direction transversale (17) et dans la direction verticale (22) d'une façon qui correspond à la forme des plateaux, de telle façon que sensiblement toute la surface filtrante (2) de la toile filtrante (5) soit balayée par le jet de lavage suivant sa forme.

7. Dispositif de lavage selon l'une des revendications précédentes, caractérisé en ce que le dispositif de lavage (1) est sous forme d'un dispositif additionnel qui peut être installé sur les supports longitudinaux (14) d'un filtre-presse à chambres (4).

8. Filtre-presse à chambres (4) avec un dispositif de déplacement pour les plateaux filtrants (3), qui consiste essentiellement en un traineau d'entraînement des plateaux guidé sur un bâti dans la direction d'empilement (13) des plateaux filtrants (3) disposés de façon déplaçable parallèlement les uns aux autres, traineau qui est muni de moyens de crantage destinés à s'enclencher sur des contre-crantages du plateau filtrant (3) extrême avant, et qui présente un entraînement du traineau avec un montage de commande qui commande le sens de rotation d'un moteur d'entraînement qui est relié électriquement à celui-ci lors du dépassement d'une résistance au mouvement qui peut être prédéterminée, le moteur d'entraînement étant actionné par l'intermédiaire d'un régulateur de puissance réglable qui peut être réglé sur un premier seuil de puissance ($P_1$) assurant juste encore une avance lente et régulière des plateaux, le moteur d'entraînement étant un servomoteur à courant continu excité de façon permanente, qui maintient sensiblement son couple au repos forcé et qui présente un faible moment d'inertie de masse ; à la sortie d'un convertisseur de tension disposé dans la conduite d'alimentation du moteur étant reliée d'une part l'entrée d'un premier système temporisé actionnable dont la sortie actionne une première entrée de commande du régulateur de puissance pour augmenter continuellement la puissance de déplacement délivrée, et d'autre part l'entrée d'un comparateur qui compare la puissance de déplacement délivrée par le régulateur avec une valeur de consigne qui peut être prédéterminée, et lorsque celle-ci est atteinte un commutateur relié à la sortie du comparateur pouvant être commandé pour inverser le sens de rotation du moteur ; et le pont du support (6) du dispositif de lavage (1) selon l'une des revendications 1 à 7 est intégré dans le traineau d'entraînement des plateaux du filtre-presse à chambres (4).

Fig. 1

Fig.2